# EUROPEAN PATENT APPLICATION

(11) **EP 0 671 809 A2**
(43) Date of publication of application: **13.09.1995**
(21) Application number: 95102779.6
(22) Date of filing: 27.02.1995
(51) Int. Cl.: H02M 7/48

(54) **Neutral point clamped electric power conversion apparatus**

(30) Priority: 10.03.1994 JP 39433/94
(71) Applicant: HITACHI, LTD., Chiyoda-ku, Tokyo 100 (JP); HITACHI MITO ENGINEERING CO., LTD., Hitachinaka-shi, Ibaraki 312 (JP)
(72) Inventor: Horie, Akira, Hitachinaka-shi, Ibaraki 312 (JP); Saitou, Syuuji, Hitachinaka-shi, Ibaraki 312 (JP); Itahana, Hiroshi, Hitachinaka-shi, Ibaraki 312 (JP)
(74) Representative: Strehl Schübel-Hopf Groening & Partner

(57) **Abstract**

A neutral point clamped electric power conversion apparatus includes four pieces of electric power semiconductor switching elements (T1∼T4) connected in series in an economic arrangement, wherein the capacity of a free wheel diode (D1, D4) connected in reverse parallel with each outer switching element (T1, T4) is greater than that of a free wheel diode (D2, D3) connected to each inner switching element (T2, T3). Unbalance in losses between the inner and the outer free wheel diodes (D1∼D4) is thus minimized by using of diodes of adequate capacities with minimum trimming being required, thereby providing an inverter circuit of excellent performance and low production cost.

## Description

### BACKGROUND OF THE INVENTION

This invention relates to a neutral point clamped electric power conversion apparatus, and in particular, it relates to a free wheel diode for use therefor.

Neutral point clamped electric power conversion apparatuses according to prior art have been disclosed in Japanese Patent Applications Nos.2-262827, 2-131370 and 1-198280, in which they comprise: switching elements connected in series of a first, a second, a third and a fourth element; a series circuit of clamping diodes connected in reverse parallel between a connection node between the first and the second switching elements and another connection node between the third and the fourth switching elements; and a free wheel diode connected in reverse parallel to each one of the foregoing switching elements.

It has been confirmed through application of the above-mentioned prior art to the actual neutral point clamped electric power conversion apparatus that there arises a new problem causing an unbalance in losses among the free wheel diodes.

When there occurs such unbalance in the losses, and if the same cooling design is applied to respective free wheel diodes without taking into account any specific requirements for respective cooling thereof, there occur such a problem that a difference in degradation of performance due to heat cycle causes an unbalance in lifetimes of respective diodes between the outer diodes and the inner diodes, eventually doubling a frequency of part replacement among them. Further, in more serious cases, the temperature of any free wheel diode in which a large loss occurs will increase to break it down.

### SUMMARY OF THE INVENTION

The main object of the invention is to provide a neutral point clamped electric power conversion apparatus which is free from unbalance in the losses among the free wheel diodes thereof.

The foregoing object of the invention is accomplished by providing a neutral point clamped electric power conversion apparatus having: the first, second, third and fourth switching elements connected in series; a series circuit of clamping diodes connected in reverse parallel between a connection node between the first and the second switching elements and another connection node between the third and the fourth switching elements; and a free wheel diode connected in reverse parallel to each one of the foregoing switching elements, wherein respective free wheel diodes connected in reverse parallel to the first and the second switching elements have a greater capacity in comparison to that of the free diodes connected in reverse parallel to the foregoing second and third switching elements.

As will be described later, the free wheel diodes connected in reverse parallel to the first and the fourth switching elements (outer switching elements) have a greater loss than the free wheel diodes connected in reverse parallel to the second and the third switching elements (inner switching elements). Such unbalance in the losses, however, can be eliminated by arranging such that the free wheel diodes connected in reverse parallel to the outer switching elements are adapted to have a greater capacity than that of the free wheel diodes connected in reverse parallel to the inner switching elements.

### BRIEF DESCRIPTION OF THE DRAWINGS

The invention will be more clearly understood with reference to the accompanying drawings, in which:
Fig. 1 is a schematic diagram of one embodiment of the invention;
Fig. 2 is a diagram indicative of principles of the invention;
Fig. 3 is a diagram indicative of another aspect of the principles of the invention;
Fig. 4 is a diagram indicative of still another aspect of the principles of the invention;
Fig. 5 is a schematic diagram illustrative of arrangement of switching elements in module;
Fig. 6 is a schematic diagram indicative of another embodiment of the invention;
Fig. 7 is a diagram of a circuit according to the invention which is applied to pressure bonding semiconductor elements;
Fig. 8 is a schematic diagram indicating an arrangement of the pressure bonding semiconductor elements;
Fig. 9 is a diagram of a circuit according to the invention which is applied to reverse conducting pressure bonding semiconductor elements;
Fig. 10 is a diagram indicating an arrangement of the reverse conducting pressure bonding semiconductor elements;
Fig. 11 is a schematic diagram indicating another embodiment of the invention; and
Fig. 12 is a schematic diagram indicating still another embodiment of the invention.

### [Description of Symbols]

T₁-T₈...transistors, D₁₂, D₁₃, D₅₂, D₅₃...clamping diodes, D₁-D₄... free wheel diodes, D₁₁, D₁₄, D₅₁, D₅₄...capacity enhancement free wheel diodes.

### PREFERRED EMBODIMENT OF THE INVENTION

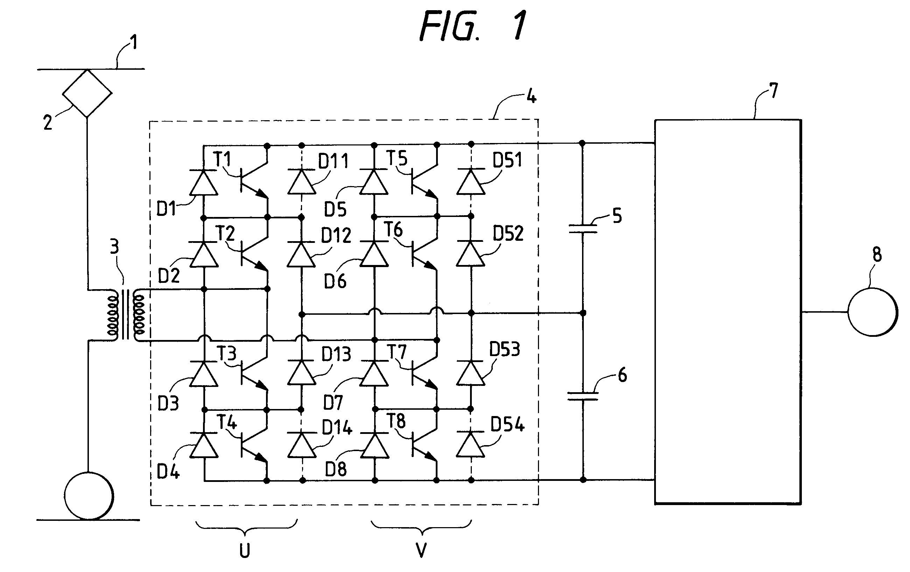

With reference to Fig. 1, there is shown one embodiment of the invention which has been applied to a neutral point clamped converter for use in an electric train.

An alternate current from an AC feeder 1 is received via a pantagraph 2, and its voltage is stepped down through a step-down transformer 3. This stepped-down alternate current is converted to a direct current voltage to coincide with a direct current voltage command in a neutral point clamped converter 4 through execution of pulse width modulation (PWM). Through tap capacitors 5,6 which serve also as a filter, this converted direct current is input to an inverter 7 in which the direct current is inverted into a three phase alternating current of a variable voltage variable frequency to drive an induction motor 8 for use in driving an electric train. By way of example, this inverter 7 may be provided as a two-level inverter or as a three-level (neutral point clamped) inverter as shown here. Further, it may also be provided as a chopper for driving a dc motor when the dc motor is used for driving the electric train.

In the neutral point clamped converter 4, transistors T₁-T₄ connected in series each of which is a switching element provided with a self-quenching function, free wheel diodes D₁-D₄ each connected in parallel to each transistor, and a series circuit of clamping diodes D₁₂, D₁₃ connected in reverse parallel between connection nodes of the outer elements T₁, T₄ and the inner elements T₂, T₃ constitute a U-phase circuit. Its V-phase is composed likewise.

An output from the transformer 3 is input to each connection node between respective inner elements (namely, between transistors T₂ and T₃, and between transistors T₆ and T₇). Further, the positive side of the tap capacitor 5 is connected with collectors of transistors T₅, T₁ and cathodes of free wheel diodes D₁, D₅, while the negative side of the tap capacitor 6 is connected with emitters of transistors T₄, T₈ as well as anodes of free wheel diodes D₄, D₈. Further, a connection node (hereinafter referred to as a neutral point) between tap capacitors 5 and 6 is connected with a connection node between clamping diodes D₁₂ and D₁₃, and between D₅₂ and D₅₃.

By way of example, in the description of this preferred embodiment of the invention, the self-quenching switching element is specified to be a transistor, however, it is not limited thereto, but it may be a GTO thyristor, IGBT, or capacitance thyristor, and in any of them the principles of the invention to be described in the following will hold its validity.

In addition to the basic configuration of the neutral point clamped converter design described above having outer elements of transistors T₁, T₄, T₅, T₆ and existing outer free wheel diodes D₁, D₄, D₅, D₈, respectively attached to respective transistors, in this embodiment of the invention, another set of free wheel diodes D₁₁, D₁₄, D₅₁, D₅₄ are further connected in reverse parallel to the outer elements such that a substantial capacity of the outer free wheel diodes becomes greater than that of the inner free wheel diodes D₂, D₃, D₆, D₇. In the circuit of Fig. 1, these newly added free wheel diodes are shown as connected in series to the clamping diodes, however, it is not limited thereto, and it should be construed that the same effect can be accomplished by connecting them, for example, in parallel with the existing outer free wheel diodes, provided that an equivalent electrical connection is ensured.

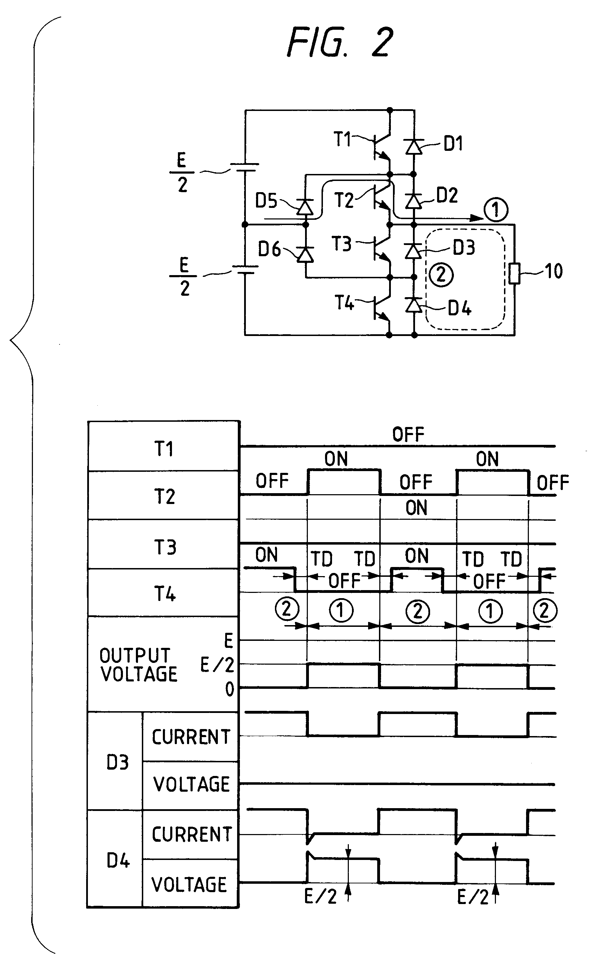

The principles of the present invention will be described in the following with reference to Figs. 2 to 4.

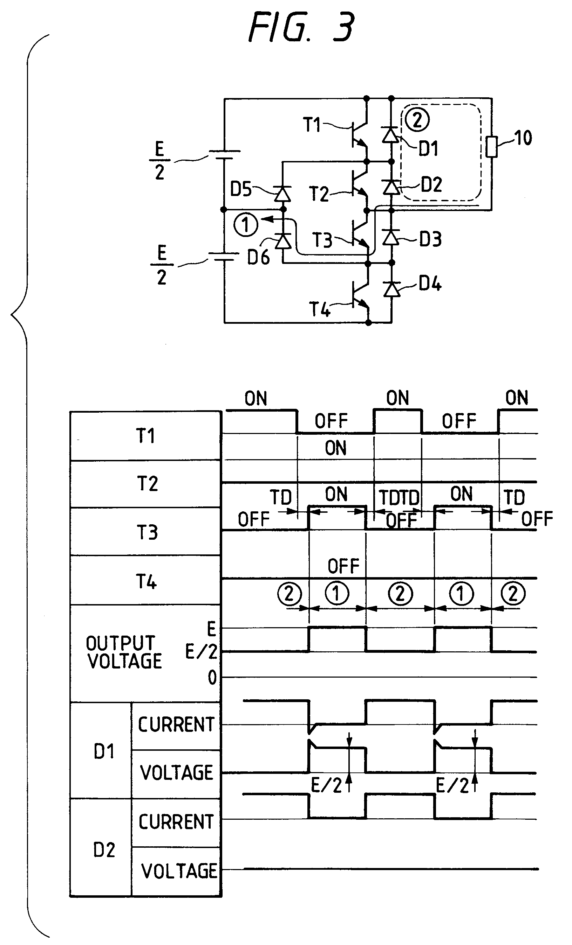

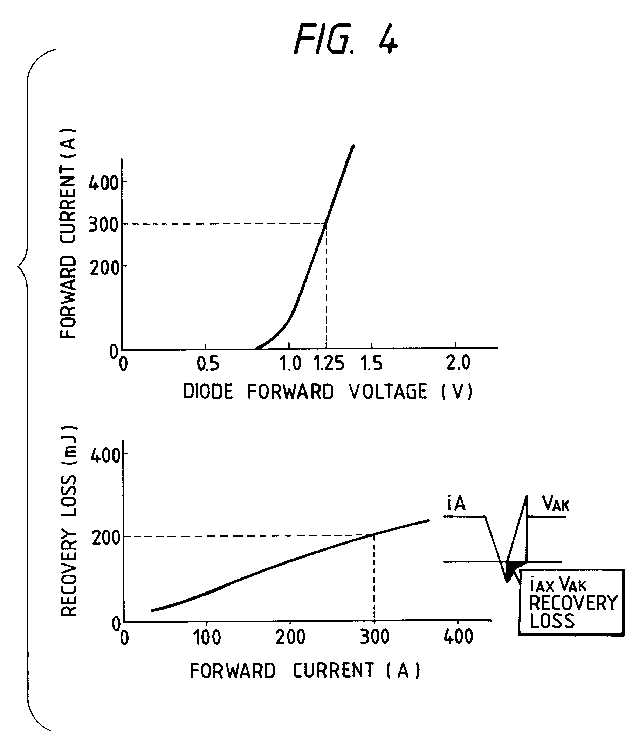

Figs. 2 and 4 are diagrams indicative of a mode of operation for one phase component in the neutral point clamped converter. Fig. 2 shows a mode of voltage change (ac side voltage) between transistors T₂ and T₃ changing between 0 and E/2, while Fig. 3 shows a mode of change of the ac side voltage changing between E/2 and E.

The neutral point clamped converter going through these operational modes provided therein is adapted to convert ac to dc, or invert dc to ac.

Firstly in Fig. 2, by switch-on of transistor T₂, a neutral point voltage is output through clamping diode D₅ and transistor T₂ to a load 10, thus, causing a current to flow in the direction of (1). Then, by switch-off of transistor T₂, the current having been flowing to the load 10 is switched to flow through free wheel diodes D₃, D₄. By repetition of this switch-on and off, a voltage of E/2 and 0 is output to the load. During this period, on-off signals for T₁ to T₄ are as follows: T₁ is constantly off, T₃ is constantly on, T₂ and T₄ repeat off→on and on→off via a non-lap time T_{D} interposed therebetween for preventing short circuit.

When switching the free wheel diodes D₃, D₄ from mode (2) in free wheel to the mode (1), T₂ is switched from off-state to on-state, which switching operation causes E/2 to be applied to the free wheel diode D₄. At this moment, a current flowing through the free wheel diode D₄ from its anode to its cathode is cancelled by E/2 from a power supply depicted in the lower portion in the drawing, gradually decreasing and eventually causing a current to flow in the reverse direction for a short duration. This event is called a recovery phenomenon of diode, which causes a recovery loss to occur in the diode.

At this moment, a load current similar to that flowing through D₄ flows through the free wheel diode D₃, however, since an on-signal is constantly applied to transistor T₃ in this mode of operation, the transistor T₃ becomes on-state whenever a reverse current tends to flow through the free wheel diode D₃. Thus, it can be clearly understood that such recovery phenomena that occurred in the free wheel diode D₄ will not occur in D₃.

With reference to Fig. 3, it will be described that the same is true with respect to free wheel diodes D₁ and D₂.

By switch on of transistor T₃, a current flows through load 10, transistor T₃ and diode D₆ to the neutral point of voltage in the direction of (2) as shown in the drawing. Then, by switch off of the transistor T₃, the current flowing through the load 10 is caused to flow through free wheel diodes D₁ and D₂. Through repetition of such switching, the load 10 is supplied with a voltage of E/2 and E.

During such operation, on and off signals of transistors T₁ to T₄ are as follows: T₄ is constantly off, T₂ is constantly on, and T₁ and T₃ repeat "off to on" and "on to off" via a non-lap time T_{D} imposed therebetween to prevent an occurrence of a short circuit.

When switching the free wheel diodes D₁, D₂ from mode (2) in a free wheel loop to mode (1), the transistor T₃ is switched from off-state to on-state, thereby, E/2 is applied to the free wheel diode D₁. During this operation, a current flowing through the free wheel diode D₁ from its anode to its cathode is canceled by E/2 from a power supply depicted in the upper portion in the drawing, gradually decreasing and eventually causing a reverse current to flow in the reverse direction for a short duration. In this instance, a recovery loss occurs in the free wheel diode D₁. At this time, a load current similar to that flowing through D₃ described above flows through the free wheel diode D₂, however, since an on-signal is constantly applied to transistor T₂ in this mode of operation, T₂ becomes on-state whenever a reverse current tends to flow through the free wheel diode D₂, thereby preventing an occurrence of recovery phenomena therein that occurred in the free wheel diode D₁.

It should be clearly understood from the foregoing description that although there occur recovery phenomena in the outer free wheel diodes D₁ and D₄, no recovery phenomena take place in the inner free wheel diodes D₂ and D₃.

With reference to Fig. 4, there are compared losses between the outer free wheel diodes D₁, D₄ and the inner free wheel diodes D₂, D₃.

In Fig. 4, there are shown examples of a forward voltage and a recovery loss in the diode.

Assuming that a switching frequency of inner transistors T₂, T₃ is 3KHz, a conduction width of the free wheel mode is 50 % duty, and an average value of an ac diode current is 300 A, a loss thereof can be broken down as follows.$\begin{matrix}\begin{matrix}\text{Forward loss=300A x 1.25V x 0.5 (duty) x 0.5 (ac half wave) = 94W} \\ \text{Recovery loss=0.25J x 3000 (switching frequency) x 0.5 (ac half wave)=375W}\end{matrix}\end{matrix}$ It is known from the above equations that a loss in the outer free wheel diodes D₁, D₄ which entails a recovery loss amounts to 469W while a loss in the inner free wheel diodes D₂, D₃ which does not accompany any recovery loss is only 94W, thus indicating the presence of a large unbalance therebetween.

In order to correct such unbalance in the losses caused in the free wheel diodes between the outer and the inner sides, the following countermeasures have been contemplated according to the invention.
(1) The outer free wheel diodes are adapted to have a larger capacity than the capacity of the inner free wheel diodes,
(2) the outer free wheel diodes in parallel connection are provided in a plural number exceeding the number of the inner free wheel diodes in parallel connection, and
(3) each outer free wheel diodes is provided with a cooling fin whose cooling performance is greater than a cooling performance for each inner free wheel diode.

One embodiment of the invention of Fig. 1 implements the concept of the above (2) according to the idea of the above (1).

Advantageously, according to this embodiment of the invention, in which the capacity of the outer free wheel diodes is adapted to become larger than the capacity of the inner free wheel diodes, the unbalance resulting between the inner and the outer diodes can be minimized by such arrangement.

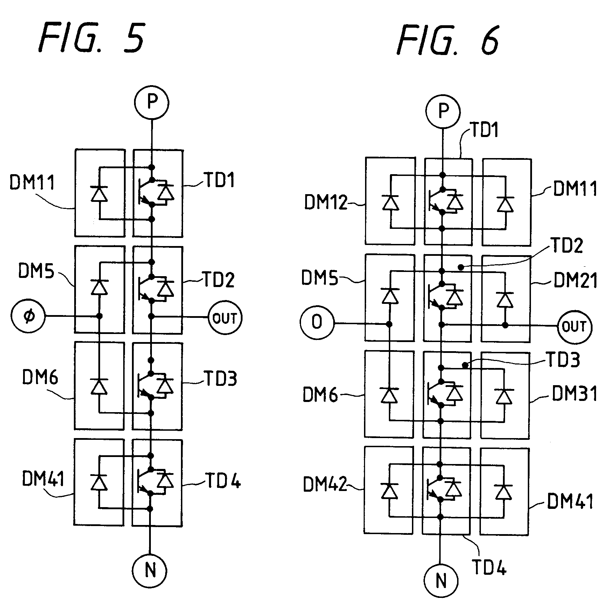

With reference to Fig. 5 there is shown a schematic diagram of a main circuit of a converter of Fig. 1, indicative of only one-phase component of one example according to the invention using a semiconductor switching module in which respective pairs of transistors T₁ to T₄ and free wheel diodes D₁ to D₄ are assembled into respective single packages.

Minimum requisite components which constitute a neutral point clamped converter circuit include semiconductor switching modules TD₁ to TD₄, and diode modules DM₅, DM₆. In addition to these, diode modules DM₁₁, DM₄₁ are further connected to semiconductor switching modules TD₁, TD₄ in parallel therewith respectively so as to increase capacities thereof.

In this configuration of Fig. 5, four pieces of semiconductor modules TD₁ - TD₄ are aligned linearly in series connection, and diode modules DM₅, DM₆ are juxtaposed to the semiconductor modules TD₂, TD₃ respectively, so as to reduce wiring and facilitate a compact circuit configuration. Then, diode modules DM₁₁, DM₄₁ are disposed respectively toward the outer ends of the diode modules DM₅, DM₆ thereby to provide a converter circuit having an excellent spatial efficiency. That is, since the cooling components can be mounted on the back surface of the module, a decrease in space and area due to their mounting can be minimized.

With reference to Fig. 6 there is shown an actual circuit arrangement of another embodiment of the invention contemplated to increase the capacities both of outer free wheel diodes and inner free wheel diodes, and still to minimize an unbalance of losses therebetween.

The circuit of Fig. 6 is based on the circuit of Fig. 5, and it further comprises free wheel diodes connected in reverse parallel therewith.

More particularly, respective diode modules are connected in reverse parallel to respective semiconductor switch modules TD₁ to TD₄, and additional diode modules DM₁₂, DM₄₂ are added only to the outer free wheel diodes by connecting in reverse parallel to transistors TD₁, TD₄.

This circuit configuration of the invention provides such advantages that the unbalance in the losses can be minimized and also any deficiency in capacity of the outer free wheel diodes can be eliminated as well.

Further, although in the embodiments of Figs. 5 and 6 the number of parallel connection of free wheel diodes is designated to be one or two, but it is not limited thereto, and its number can be further increased to attain the object of the invention likewise.

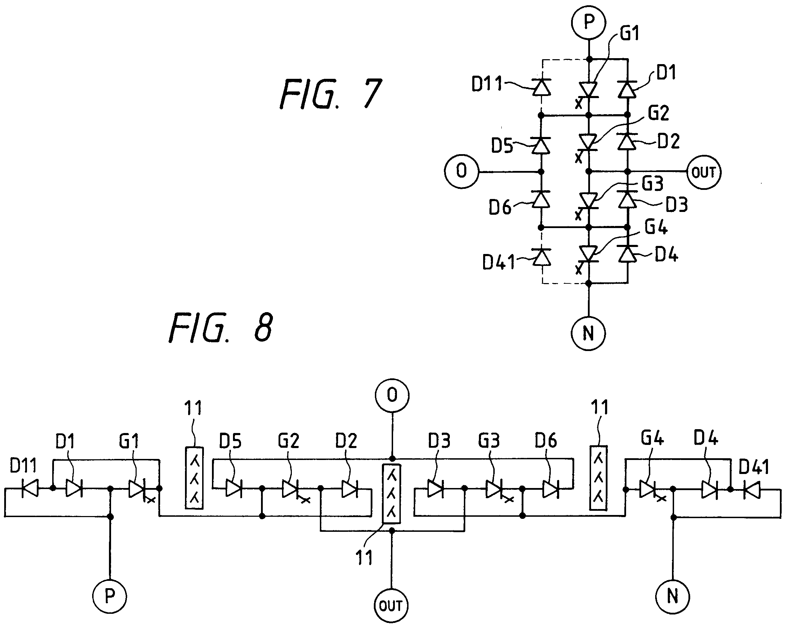

With reference to Fig. 7 there is shown one embodiment of the invention as applied to a planar type semiconductor element such as a GTO thyristor which is fabricated by pressure bonding a semiconductor pellet which is disposed between copper posts in a disk form at their both ends. More specifically, it is shown in this example that free wheel diodes D₁₁, D₄₁ are connected in reverse parallel to GTO thyristors G₁, G₄ respectively. Certainly, the object of the invention to minimize the unbalance of the losses can be accomplished likewise by arranging such that D₁, D₄ have a greater capacity than D₂, D₃ without addition of free wheel diodes D₁₁, D₄₁.

With reference to Fig. 8, there is shown an example of arrangements of switching elements and diodes subject to pressure bonding to compose a converter circuit utilizing the planar semiconductor elements as shown in Fig. 7 according to the invention.

When using planar semiconductor elements such as GTO thyristors, all components corresponding to one phase must be aligned straight in respect of the specific design requirements to deal with the pressure bonding and the particular cooling method. As shown in the drawing of Fig. 8, this straight alignment of circuitry of one phase components can readily be implemented by arranging such that each insulation member 11 is inserted between a GTO thyristor G₁ and a clamping diode D₅, between free wheel diodes D₂ and D₃, and between free wheel diodes D₁ and D₄, respectively, then diodes D₁₁ and D₄₁ are disposed additionally outward from the free wheel diodes D₁ and D₄, respectively, then, subjecting to a pressure bonding in perpendicular directions under a prescribed pressure.

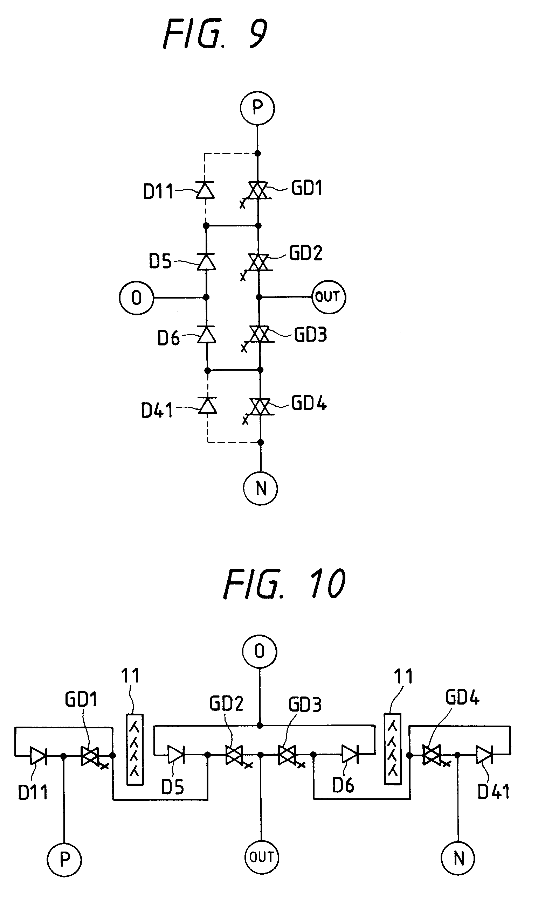

With reference to Fig. 9, there is shown a planar semiconductor device such as a reverse conducting GTO thyristor of another embodiment of the invention which has integrated switching elements and reverse parallel connection diodes on the same semiconductor pellet. In this embodiment, free wheel diodes D₁₁ and D₄₁ are connected in reverse parallel with reverse conducting GTO thyristors GD₁ and GD₄, respectively. Certainly, the object of the invention can be attained likewise by providing a greater capacity to GD₁ and GD₄ than that of GD₂ and GD₃ without addition of D₁₁, D₄₁.

Fig. 10 shows an example of arrangements of switching elements and diodes subject to pressure-bonding to constitute a converter circuit utilizing the planar semiconductor device of Fig. 9. It can be understood that a circuit of this embodiment can be readily implemented by pressure-bonding these elements in the above arrangement from both sides with a predetermined pressure, .

When using the planar semiconductor elements, the object of the invention can be attained as well by varying the capacity of individual cooling fins for cooling individual elements.

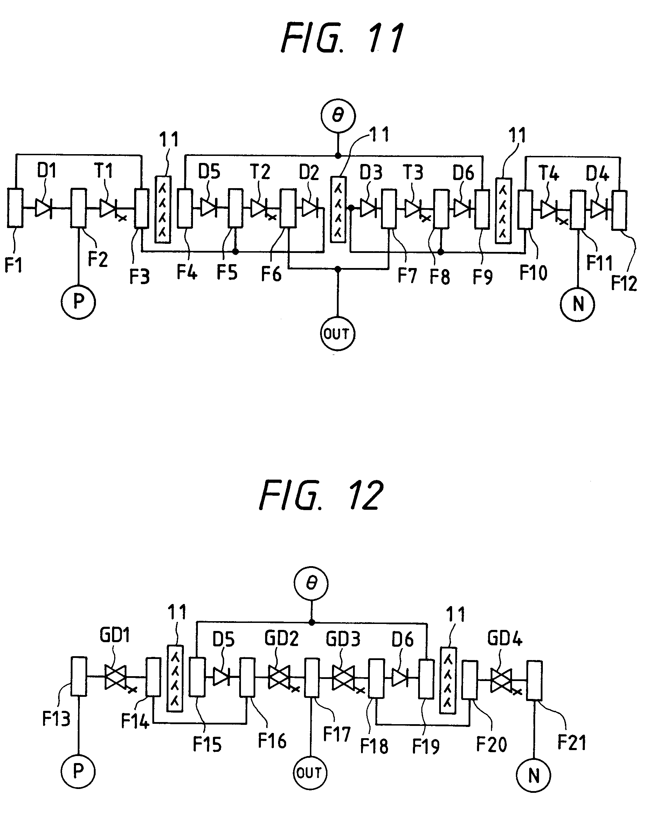

With reference to Fig. 11, there is shown another embodiment of the invention which is a modification of the embodiment of Fig. 7, in which the free wheel diodes D₁₁, D₄₁ installed for increasing capacity are removed, and instead thereof, capacities of cooling fins for cooling these free wheel diodes are varied between the outer free wheel diodes D₁, D₄ and the inner free wheel diodes D₂, D₃. In order to enhance cooling capacities for the outer diodes, free wheel diode D₁ is provided with two pieces of cooling fins F₁, F₂ on both sides thereof, also free wheel diode D₄ is provided with two pieces of cooling fins F₁₁, F₁₂ on both sides thereof, while free wheel diode D₂ is provided with a single fin F₆ on one side thereof and free wheel diode D₃ is provided with a single fin F₇ on one side thereof.

Even in the case where all of respective diodes are provided with cooling fins on both sides thereof, by arranging such that the cooling fins for the outer free wheel diodes D₁, D₄ have a greater cooling capacity than for the inner free wheel diodes D₂, D₃, the object of the invention can be attained likewise.

Fig. 10 shows still another embodiment of the invention based on a modification of the embodiment of Fig. 9, in which the object of the invention has been accomplished with a minimum number of cooling fins, wherein instead of adding free wheel diodes D₁₁, D₄₁, reverse conducting GTO thyristors GD₁, GD₄ disposed outward are provided with four pieces of cooling fins F₁₃, F₁₄, F₂₀ and F₂₁, while reverse conducting GTO thyristors GD₂, GD₃ disposed internally are provided with three pieces of cooling fins F₁₆, F₁₇ and F₁₈.

As described above, the object of the invention can be accomplished likewise by arranging such that the cooling fins for cooling the outer reverse conducting GTO thyristors GD₁, GD₄ are adapted to have a greater cooling capacity than a cooling capacity for the inner reverse conducting GTO thyristors GD₂, GD₃.

According to the foregoing embodiment of the invention, the loss unbalance associated with the prior art can be minimized without increasing the number or capacity of free wheel diodes,.

By way of example, all of the foregoing embodiments described herein are concerned with converters. It is because that the foregoing problematic tendency becomes most significant during power running of an electric train when its converters are converting ac to dc.

However, even in the case of a three-level ac inverter such as a neutral point clamped inverter in which dc is inverted into three-level ac to urge an induction motor, a substantial unbalance of losses occurs between inner and outer free wheel diodes due to a regenerative operation. Thereby, outer free wheel diodes in the three-level inverter may be adapted to have a greater capacity as described above to prevent such occurrence. Namely, this invention can be applied to any electric power converter of a neutral point clamped type.

Further, in a main circuit configuration of a neutral point clamped converter circuit in conjunction with a neutral point clamped inverter circuit, although it is prerequisite to provide a greater capacity for the outer free wheel diodes or a greater cooling capacity therefor on its converter circuit, it is not always necessary to provide the same on its inverter circuit.

Further, the foregoing embodiments of the invention described above are all concerned with electric train controls, however, it is not limited thereto, and it should be construed that the invention can be applied to any application requiring a neutral point clamped converter or inverter, including, for example, a converter or inverter main circuit for use in rolling mill controls or the like.

As described heretofore, according to the invention, a neutral point clamped electric power conversion apparatus has been manufactured at a reduced cost, which features such advantages that the unbalance in losses between the outer free wheel diodes and the inner free wheel diodes has been solved by employing an appropriate diode having an adequate capacity trimming superfluity design to each of the foregoing diodes, and by providing an adequate cooling capacity to each of them.

## Claims

1. A neutral point clamped electric power conversion apparatus having
a first series circuit connecting first to fourth switching elements (T1∼T4)
a second series circuit of clamping diodes (D12, D13) connected in reverse parallel with said first series circuit between first connection node disposed between said first and said second switching elements (T1, T2) and a second connection node disposed between said third and said fourth switching elements (T3, T4), and
a free wheel diode (D1∼D4) connected in reverse parallel with each one of said switching elements (T1∼T4),
**characterised** in that each of the free wheel diodes (D1, D4) connected in parallel to said first and fourth switching elements (T1, T4) has a greater capacity than each of the free wheel diodes (D2, D3) connected in parallel to said second and third switching elements (T2, T3).

2. The apparatus of claim 1, wherein each of said first and fourth switching elements comprises a greater number of free wheel diodes connected in parallel therewith, so as to increase a capacity thereof, than each of said second and third switching elements.

3. The apparatus of claim 1 or 2, wherein each of said first and fourth switching elements comprises cooling means for cooling the free wheel diodes connected in parallel therewith and having a greater cooling capacity so as to substantially increase the capacity of the diodes, as compared to cooling means provided for cooling the free wheel diodes connected in parallel with said second and third switching elements.

4. The apparatus of any one of claims 1 to 3, for converting alternating current into direct current or vice versa.

5. A neutral point clamped electric power conversion apparatus having
a first series circuit including first to fourth semiconductor modules, each having a switching element and a diode connected in reverse parallel with each other, and
a second series circuit including clamping diodes connected in reverse parallel with said first series circuit between a first connection node between a first and a second switching element and a second connection node between a third and a fourth switching element, wherein
each of said first and fourth semiconductor modules comprises an outer diode connected in reverse parallel therewith.

6. The apparatus of claim 6, wherein said semiconductor modules are aligned linearly, and said clamping diodes and said outer diodes are arranged linearly in parallel with said aligned semiconductor modules.

7. The apparatus of claim 6, wherein a diode is connected in reverse parallel with each of said semiconductor modules.
